# EUROPEAN PATENT APPLICATION

(11) **EP 4 517 309 A1**
(43) Date of publication of application: **05.03.2025**
(21) Application number: 22940268.0
(22) Date of filing: 28.04.2022
(51) Int. Cl.: G01N 21/90

(54) **INSPECTION APPARATUS, INSPECTION SYSTEM, CONTROL DEVICE, INSPECTION METHOD, AND PROGRAM**

(71) Applicant: NEC Corporation, 108-8001 Tokyo (JP)
(72) Inventor: INOUE Michiaki, Tokyo 108-8001 (JP)
(74) Representative: Betten & Resch
(86) International application number: PCT/JP2022/019414
(87) International publication number: WO 2023/209995

(57) **Abstract**

An inspection apparatus includes a gripping device that grips a container filled with a liquid, a first illumination unit that emits light to the liquid from one end portion side of the container in a longitudinal direction, and a first illumination control unit that is allowed to control an incidence angle of the light emitted from the first illumination unit on the liquid to a freely selected angle, in which the first illumination unit and the first illumination control unit are disposed in the same direction as an imaging apparatus that acquires image data indicating a state of the liquid, as viewed from the container, and the incidence angle of the light emitted from the first illumination unit is made continuously controllable to the freely selected angle with an angle at which brightness in the container is most uniform as a reference.

## Description

### TECHNICAL FIELD

The present invention relates to an inspection apparatus, an inspection system, a control device, an inspection method, and a program.

### BACKGROUND ART

A technique for detecting an observation target object such as foreign matters present in a liquid accommodated in a container is known.

For example, Patent Document 1 describes a foreign matter detection system that retains a container in such a manner as to freely rotate around a first axis different from a center axis of the container and a second axis perpendicular to the first axis. According to Patent Document 1, an illumination light source is disposed on the opposite side of the container from a camera that is an imaging apparatus. According to such a configuration, the imaging apparatus acquires image data in a state in which the imaging apparatus is irradiated with light across the container.

### Prior Art Documents

### Patent Documents

Patent Document 1: Japanese Unexamined Patent Application, First Publication No. 2020-118458

### SUMMARY OF INVENTION

### Problem to be Solved by the Invention

As described in Patent Document 1, in a case where the illumination light source is disposed on the opposite side of the container from the camera that is the imaging apparatus, it is possible to observe the whole aspect of an external shape of a target such as a non-transparent foreign matter like a hair fragment. On the other hand, it is difficult to observe the total aspect of an external shape of a target such as a foreign matter like a scratch formed on a container or a glass fragment that transmits light or an elongated foreign matter like a fiber fragment.

For this reason, it is difficult for an inspection apparatus of Patent Document 1 to detect the external shape of the observation target object.

An object of the present invention is to provide an inspection apparatus, an inspection system, a control device, an inspection method, and a program that solve any of the above-described problems.

### Means for Solving the Problem

An inspection apparatus of a first aspect includes a gripping device that grips a container filled with a liquid, a first illumination unit that emits light to the liquid from one end portion side of the container in a longitudinal direction, and a first illumination control unit that is allowed to control an incidence angle of the light emitted from the first illumination unit on the liquid to a freely selected angle, in which the first illumination unit and the first illumination control unit are disposed in the same direction as an imaging apparatus that acquires image data indicating a state of the liquid, as viewed from the container, and the incidence angle of the light emitted from the first illumination unit is made continuously controllable to the freely selected angle with an angle at which brightness in the container is most uniform as a reference.

A control device of a second aspect includes first command means for sending a command to a first illumination control unit to continuously control an incidence angle of light emitted from a first illumination unit, which emits the light to a liquid from one end portion side of a container filled with the liquid in a longitudinal direction, on the liquid to a freely selected angle with an angle at which brightness in a container is most uniform as a reference, and an image processing means for acquiring image data indicating a state of the liquid, in which the first illumination unit and the first illumination control unit are disposed in the same direction as an imaging apparatus that acquires the image data, as viewed from the container.

An inspection method of a third aspect includes continuously controlling an incidence angle of light emitted from a first illumination unit, which emits the light to a liquid from one end portion side of a container filled with the liquid in a longitudinal direction, on the liquid to a freely selected angle by a first illumination control unit with an angle at which brightness in a container is most uniform as a reference, and acquiring image data indicating a state of the liquid, in which the first illumination unit and the first illumination control unit are disposed in the same direction as an imaging apparatus that acquires the image data, as viewed from the container.

A program of a fourth aspect causes a computer to execute continuously controlling an incidence angle of light emitted from a first illumination unit, which emits the light to a liquid from one end portion side of a container filled with the liquid in a longitudinal direction, on the liquid to a freely selected angle by a first illumination control unit with an angle at which brightness in a container is most uniform as a reference, and acquiring image data indicating a state of the liquid, in which the first illumination unit and the first illumination control unit are disposed in the same direction as an imaging apparatus that acquires the image data, as viewed from the container.

### Effect of the Invention

According to the above-described aspects, an external shape of an observation target object is easily detected.

### BRIEF DESCRIPTION OF THE DRAWINGS

FIG. 1 is a side view illustrating a configuration example of an inspection system in a first example embodiment of the present disclosure.
FIG. 2 is a front view illustrating a configuration example of the inspection system in the first example embodiment of the present disclosure.
FIG. 3 is a front view illustrating an angle of illumination that is controlled by the inspection system in the first example embodiment of the present disclosure.
FIG. 4 is a block diagram illustrating a control device in the first example embodiment of the present disclosure.
FIG. 5 is a flowchart illustrating an operation example of the inspection system in the first example embodiment of the present disclosure.
FIG. 6 is a block diagram illustrating a control device in a second example embodiment of the present disclosure.
FIG. 7 is a flowchart illustrating an operation example of an inspection system in the second example embodiment of the present disclosure.
FIG. 8 is a graph illustrating a control example of an illumination angle.
FIG. 9 is a diagram illustrating an example of a contour extraction algorithm in a case where an observation target object is continuously floating at the same position.
FIG. 10 is a diagram illustrating an example of a contour extraction algorithm in a case where the observation target object is continuously moving.
FIG. 11 is a side view illustrating an inspection apparatus in an example embodiment of a minimum configuration of the present disclosure.
FIG. 12 is a block diagram illustrating a control device in the example embodiment of a minimum configuration of the present disclosure.
FIG. 13 is a flowchart illustrating an inspection method in the example embodiment of the minimum configuration of the present disclosure.

### EXAMPLE EMBODIMENTS

Each example embodiment of the present invention will be described below in detail with reference to the drawings.

### <First Example Embodiment>

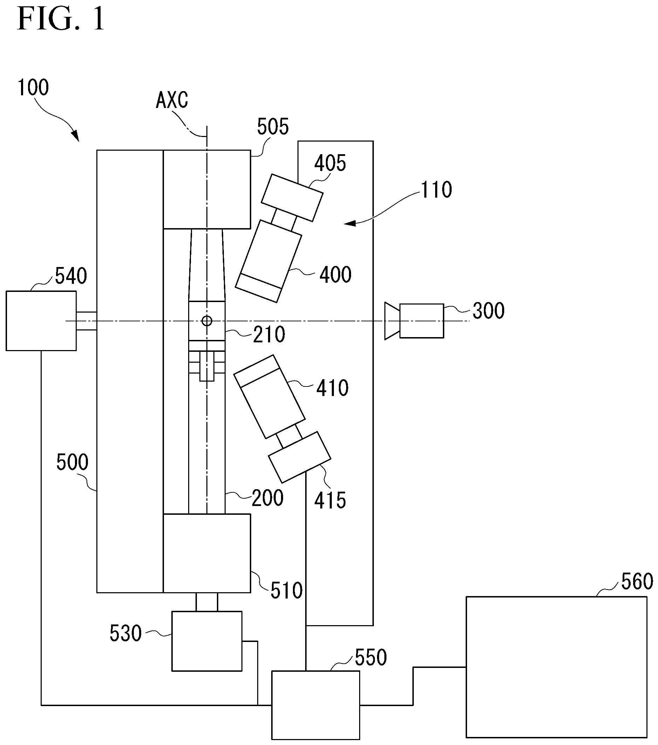

An inspection system of a first example embodiment will be described with reference to FIGS. 1 to 5.

### (Description of Configuration)

In the present example embodiment, an inspection system 100 that acquires image data from which an external shape can be extracted in detecting a foreign matter mixed inside a container filled with a liquid such as water or medicine will be described. As described below, in the inspection system 100, a first illumination unit 400, a second illumination unit 410, a first illumination control unit 405, and a second illumination control unit 415 are provided in the same direction as a side on which a camera 300 is installed, as viewed from a container 200. The first illumination control unit 405 and the second illumination control unit 415 can control an incidence angle on the container 200. In the present example embodiment, a case where a syringe is used as the container will be described. The container 200 may be another container having light transmittance such as a glass bottle or a PET bottle.

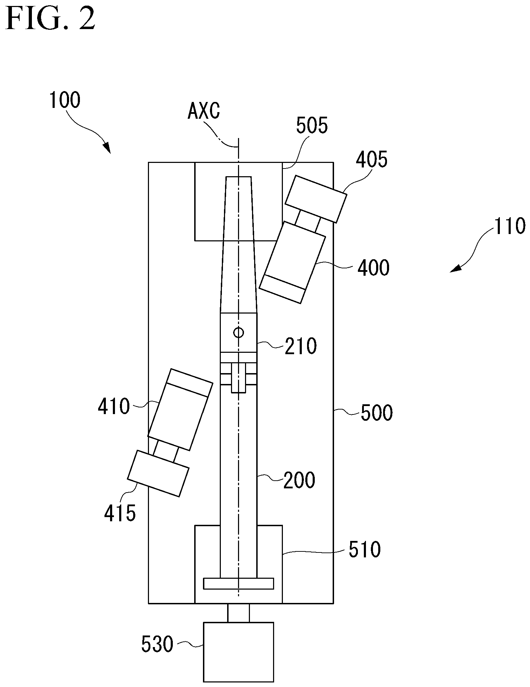

In FIGS. 1 and 2, the inspection system 100 includes, as an example, an inspection apparatus 110, the camera 300 that is an imaging apparatus, and a determination device 560.

The inspection apparatus 110 is an apparatus that rotates the container 200 while gripping both end portions of the container 200 filled with a liquid 210. As an example, the inspection apparatus 110 can rotate the container 200 around a first rotation axis that is a center axis AXC passing in a longitudinal direction of the container 200 and a second rotation axis that is a center axis passing through a center of the container 200 and a center of the camera 300. The first rotation axis and the second rotation axis intersect at right angles at the center of the container 200 being gripped. In this way, the inspection apparatus **110** has biaxial rotating means.

In FIGS. 1 and 2, the inspection apparatus **110** has a gripping device 500, a first motor 530, a second motor 540, the first illumination unit 400, the first illumination control unit 405, the second illumination unit 410, the second illumination control unit 415, and a control device 550.

The gripping device 500 grips the container 200 and rotates around the first rotation axis and the second rotation axis according to rotation of the first motor 530 and the second motor 540 functioning as rotating means. The gripping device 500 includes a first gripping part 505 and a second gripping part 510 that grip both ends of the container 200. The gripping device 500 may have a freely selected shape.

The gripping device 500 is connected to the first motor 530 rotating around the first rotation axis. The gripping device 500 is connected to the second motor 540 rotating around the second rotation axis in a flat plate portion connecting the first gripping part 505 and the second gripping part 510. The first motor 530 and the second motor 540 rotate themselves with power supplied from the outside, so that the gripping device 500 rotates around the first rotation axis in response to the rotation of the first motor 530 and rotates around the second rotation axis in response to the rotation of the second motor 540.

The first illumination unit 400 emits light to the liquid 210, with which the container 200 is filled, from one end portion of the container 200 in the longitudinal direction. The first illumination unit 400 can perform incidence angle control on the liquid 210 with the first illumination control unit 405. For example, the first illumination unit 400 has a rectangular shape, a circular shape, or the like and can perform surface light emission. For example, the first illumination unit 400 is disposed in the same direction as a side on which the camera 300 is provided, as viewed from the container 200. According to such a configuration, it can be said that the camera 300 is provided to observe reflection of light from the first illumination unit 400.

The first illumination control unit 405 can control an incidence angle of light emitted from the first illumination unit 400 on the container 200 to a freely selected angle.

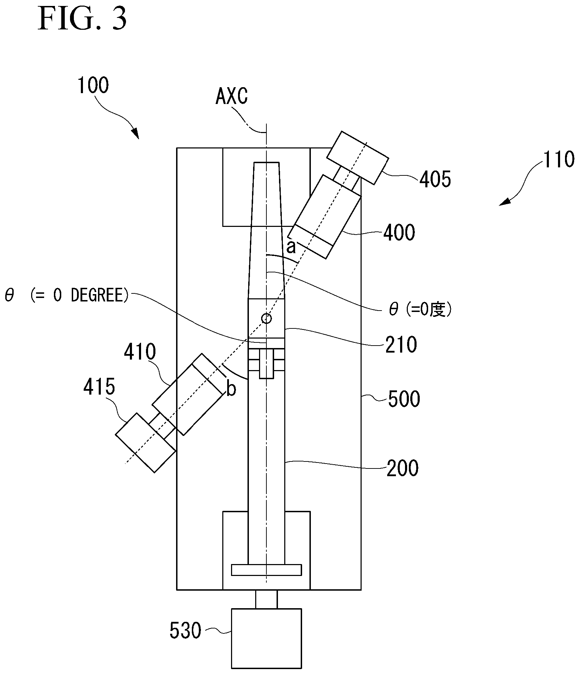

In FIG. 3, the first illumination control unit 405 can continuously control the incidence angle of light of the first illumination unit 400 on the liquid 210 to a freely selected angle within a range of θ±a with an angle θ that is an incidence angle at which brightness in the container 200 is most uniform as a reference. In a case where reflection of the container 200 is strong according to the shape of the container, or the like, the incidence angle of light may be set within an asymmetrical range with the angle θ as a reference.

The incidence angle indicates, for example, the angle of an incidence direction of light with respect to the center axis AXC as viewed from the camera 300 side.

FIG. 3 illustrates a case where the angle θ as a reference is 0 degree and the incidence angle is θ + a (= a).

The second illumination unit 410 emits light to the liquid 210, with which the container 200 is filled, from the other end portion side of the container 200 in the longitudinal direction. For example, the second illumination unit 410 has a rectangular shape, a circular shape, or the like and can permit surface light emission. For example, the second illumination unit 410 can perform incidence angle control on the liquid 210 with the second illumination control unit 415. For example, the second illumination unit 410 is provided in the same direction as a side on which the camera 300 is provided, as viewed from the container 200. According to such a configuration, it can be said that the camera 300 is provided to observe reflection of light from the second illumination unit 410.

The second illumination control unit 415 can control an incidence angle of light emitted from the second illumination unit 410 on the container 200 to a freely selected angle.

In FIG. 3, the second illumination control unit 415 can continuously control the incidence angle of light of the second illumination unit 410 on the liquid 210 to a freely selected angle within a range of θ ± b with an angle θ that is an incidence angle at which brightness in the container 200 is most uniform as a reference. In a case where the reflection of the container 200 is strong due to the shape of the container, or the like, the incidence angle of light may be set within an asymmetrical range with the angle θ as a reference.

FIG. 3 illustrates a case where the angle θ as a reference is 0 degree, and the incidence angle is θ + b (= b).

The angles of a and b can be controlled up to a range in which illumination light from the first illumination unit 400 and the second illumination unit 410 is reflected in the container 200 and reflected light does not influence an observation area of the camera 300. a and b may be the same value or may be different. For example, the angles of a and b may be set to angles of -20 degrees to +20 degrees or may be set to angles of -30 degrees to +30 degrees.

The control device 550 is an information processing device that controls the rotation speed of the first motor 530, a rotation speed of the second motor 540, the angle of the first illumination control unit 405, and the angle of the second illumination control unit 415. For example, the control device 550 has, as a hardware configuration, an arithmetic device 551 such as a central processing unit (CPU), a storage device 552, and a communication interface 553, and controls the rotation speed of the first motor 530, the rotation speed of the second motor 540, the angle of the first illumination control unit 405, and the angle of the second illumination control unit 415 by the arithmetic device 551 executing a program stored in the storage device 552. In other words, for example, the control device 550 gives a prescribed instruction to the first motor 530, the second motor 540, the first illumination control unit 405, and the second illumination control unit 415 to implement rotation control according to a predetermined program in response to a start instruction from an external device connected to the control device 550, a start instruction input to the control device 550, or the like.

The communication interface 553 is a connection interface for connection to another device to be communicable in a wired or wireless manner.

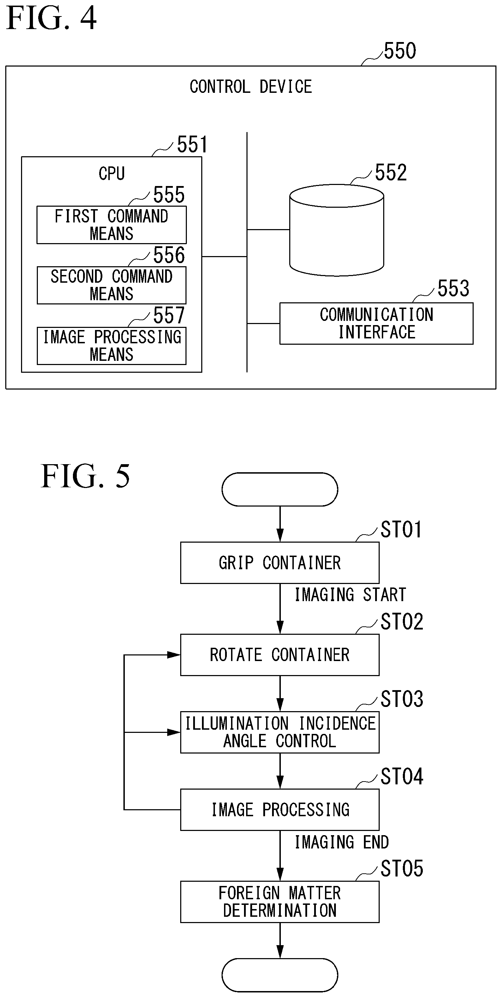

As illustrated in FIG. 4, the control device 550 functionally includes first command means 555, second command means 556, and image processing means 557. In the present example embodiment, the arithmetic device 551 fulfills various functions by operating according to a program prepared in advance.

The first command means 555 sends a command to the first illumination control unit 405 to continuously control the incidence angle of light emitted from the first illumination unit 400 on the liquid 210 to a freely selected angle.

The first command means 555 sends a command to the first motor 530 and the first illumination control unit 405 via the communication interface 553 to control the rotation speed of the first motor 530 and the angle of the first illumination control unit 405.

The second command means 556 sends a command to the second illumination control unit 415 to continuously control the incidence angle of light emitted from the second illumination unit 410 on the liquid 210 to a freely selected angle.

The second command means 556 sends a command to the second motor 540 and the second illumination control unit 415 via the communication interface 553 to control the rotation speed of the second motor 540 and the angle of the second illumination control unit 415.

The control device 550 can control the first illumination unit 400, the first illumination control unit 405, the second illumination unit 410, and the second illumination control unit 415 to emit light to the liquid 210 from a position where the center axis AXC is tilted by a freely selected value with respect to the angle θ as a reference in a vertical direction perpendicular to the center axis AXC by combining the commands of the first command means 555 and the commands of the second command means 556.

For example, the control device 550 can control the first illumination unit 400, the first illumination control unit 405, the second illumination unit 410, and the second illumination control unit 415 such that the first illumination unit 400 and the second illumination unit 410 continuously emit light to the liquid 210 at -20 degrees to +20 degrees with respect to the angle θ as a reference by combining the commands of the first command means 555 and the commands of the second command means 556. In this case, the camera 300 acquires image data indicating a state of an observation target object in the liquid 210 during light emission.

The image processing means 557 identifies an observation target object moving for a certain time and an observation target object being stationary from the image data and outputs the observation target object.

The image processing means 557 extracts a contour close to an original external shape of the observation target object according to a movement amount of the observation target object from the image data.

The above configuration is a configuration example of the inspection apparatus 110.

The camera 300 is an imaging apparatus that acquires image data by imaging the container 200. For example, the camera 300 is provided in advance at a prescribed position in the same direction as a side on which the first illumination unit 400 or the second illumination unit 410 is positioned, as viewed from the container 200 using camera fixing means (not illustrated) or the like. Specifically, the camera 300 is provided such that an optical axis of the camera 300 overlaps the second rotation axis. The position where the camera 300 is provided may be a portion other than the above-described position.

For example, the camera 300 can acquire image data at a high frame rate of about 150 to 200 fps. The camera 300 can transmit the acquired image data to an external device connected to the camera 300 along with information indicating an imaging time and the like. The camera 300 may acquire image data at a frame rate other than the above-described frame rate.

The container 200 is a container having light transmittance such as a syringe, a glass bottle, or a PET bottle. As described above, in a case where the viscosity of the liquid 210 with which the container 200 is filled is high, it is assumed that a syringe is used as the container 200. The container 200 is filled with the liquid 210 such as water or medicine. A scratch, dirt, or the like is likely to be stuck to the container 200. Foreign matter is likely to be mixed inside the container 200. Examples of the foreign matter include a rubber piece, hair, a fiber fragment, soot, or a glass or plastic fragment.

The above configuration is a configuration example of the inspection system 100. As described above, the image data acquired by the camera 300 in the inspection system 100 can be utilized in determining a foreign matter in a determination device that performs external foreign matter determination, or the like. **In** the present example embodiment, an algorithm that is used in a case where the determination device 560 performs foreign matter determination is not particularly limited.

### (Description of Operation)

Next, the operation of the entire inspection system 100 of the present example embodiment will be described in detail with reference to a flowchart of FIG. 5.

First, the container 200 is provided in the gripping device 500 to be rotatable around a first axis and a second axis (ST01: gripping step). Next, the camera 300 starts imaging in response to a command from the control device 550. Next, the rotation speed of the first motor 530 and the rotation speed of the second motor 540 are controlled in response to a command from the control device 550, and the camera 300 continues imaging, while the container is stationary or rotates (ST02: rotation step). Next, while the container 200 is stationary, the angle of the first illumination control unit 405 and the angle of the second illumination control unit 415 are controlled in response to a command from the control device 550 (ST03: incidence angle control step). A contour close to the original external shape of an air bubble or a foreign matter in the container 200 is extracted from continuous image data captured by the camera 300 in the control device 550 (ST04: image processing step). In a case where the rotation of the container 200 is restarted, the control of the angle of the first illumination control unit 405 and the angle of the second illumination control unit 415 is restarted at a time when the container 200 is stationary next. Finally, the rotation of the container 200 and the imaging of the camera 300 end, and the determination device 560 performs foreign matter determination from a contour extraction result and the image data, a statistic during tracking processing, and the like in the control device 550 (ST05: foreign matter determination step).

Next, the container rotation of the present example embodiment will be described.

First, the container rotation that is performed by the inspection apparatus 110 includes two kinds of rotations of the first axis and the second axis. The first axis causes rotation by 90 degrees or more and foreign matters to move within an observable range of the camera 300 according to gravity, contained air bubbles, or the like in a case where there may be foreign matters at both ends of the container 200 in the longitudinal direction. The second axis causes rotation by 90 degrees to 180 degrees and foreign matters to move within an observable range of the camera 300 according to gravity, contained air bubbles, or the like in a case where there may be foreign matters at both ends of the container 200 in a transverse direction.

The camera 300 observes the foreign matters during a series of stationary swings and acquires continuous images of the behavior or external shape of the foreign matters by combining the two kinds of rotations optionally and providing a stationary time for each container rotation. In a case where the container 200 rotates around the first axis, to prevent reflection from the container to the camera 300, the container 200, the first illumination unit 400, and the second illumination unit 410 rotate while keeping a relative angle constant or at an angle having no influence of reflected light.

### (Operation and Effects)

Next, the operation and effects of the present example embodiment will be described.

In the present example embodiment, the inspection apparatus 110 is configured to continuously control the incidence angles of light emitted from the first illumination unit 400 and the second illumination unit 410 on the container 200 and, at the same time, image a state of changing a point where light is reflected on the surface of the same observation target object such as a foreign matter or an air bubble. Thus, it is possible to extract the contour of the observation target object.

For this reason, the inspection apparatus 110 of the present example embodiment easily detects the external shape of the observation target object.

As a comparative example, in a method for simply emitting light to an observation target object and observing reflected light, since even a semitransparent foreign matter such as a glass fragment can be imaged, reflected light is reflected by only a portion of an observation target object. Thus, in the method of the comparative example, it may be difficult to detect the external shape of the observation target object.

As another comparative example, in a method for moving the container itself in the above-described comparative example and continuously changing an incident angle of emitted light, information close to an external shape of a foreign matter is obtained by making an observation in such a manner that a portion where reflected light is reflected is changed. However, since an observation target object in a liquid is moved under an influence of a liquid current or the like by moving the container itself, it may be difficult to continuously observe the change of reflected light.

In contrast, since the incidence angle of emitted light is continuously changed without moving the container itself, the inspection apparatus **110** of the present example embodiment easily detects the external shape of the observation target object.

### <Second Example Embodiment>

An inspection system of a second example embodiment will be described.

The present example embodiment is different from the first example embodiment in that the operation of the inspection system 100 and the functions of the image processing means 557 are specified in more detail. Other configurations are the same as those of the inspection system 100 of the first example embodiment.

### (Configuration)

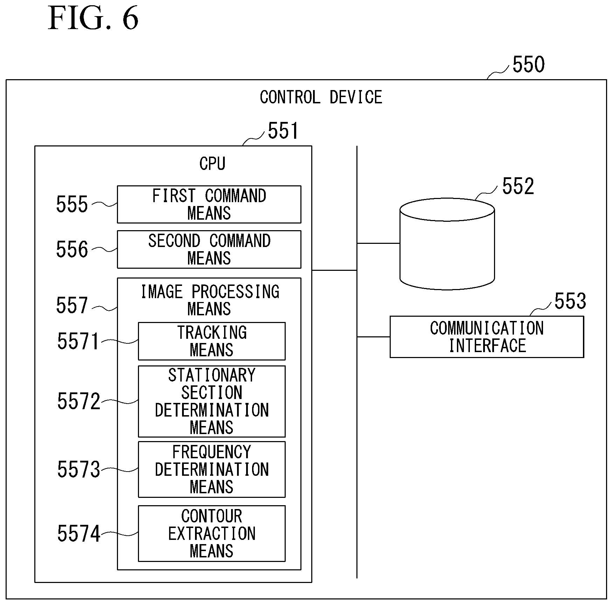

In the present example embodiment, as illustrated in FIG. 6, the image processing means 557 functionally includes tracking means 5571, stationary section determination means 5572, frequency determination means 5573, and contour extraction means 5574.

The tracking means 5571 performs tracking processing on each of observation target objects.

The stationary section determination means 5572 determines whether or not a stationary section that is a period during which the container 200 is stationary ends.

The frequency determination means 5573 determines whether or not a swing frequency is less than a preliminarily set frequency.

The contour extraction means 5574 extracts a contour of an external shape of an observation target object from continuous image data captured by the camera 300 in the control device 550.

### (Operation)

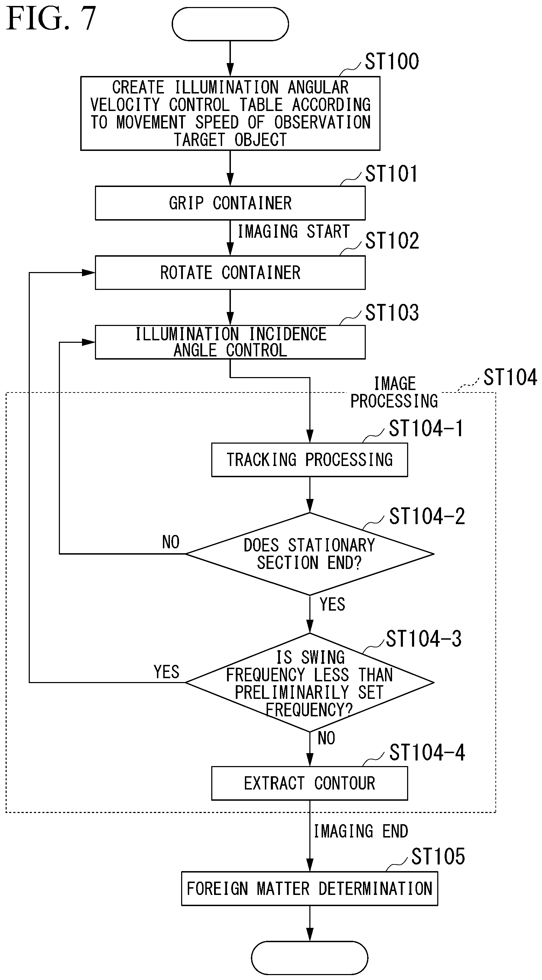

An algorithm that swings the container 200, controls illumination angles of the first illumination unit 400 and the second illumination unit 410, and extracts a contour close to an original external shape of an air bubble or a foreign matter in the container 200 from continuous image data captured by the camera 300 in the control device 550 in the present example embodiment will be described with reference to a flowchart of FIG. 7.

First, an illumination angular velocity control table according to a movement speed of an observation target object is created (ST100: table creation step). A look-up table that is a first example of the illumination angular velocity control table will be described. In a case where the illumination angular velocities of the angle of the first illumination control unit 405 and the angle of the second illumination control unit 415 according to the movement speed of the observation target object are determined by the look-up table, a table in which the movement speed of the observation target object, the angle of the first illumination control unit 405, and the angle of the second illumination control unit 415 are associated is created. Subsequently, a calculation expression that is a second example of the illumination angular velocity control table will be described. In the second example, an illumination angular velocity calculation expression set in advance is provided, and an illumination angular velocity is determined according to a movement speed of an observation target object. This calculation expression indicates a proportional relationship of the movement speed and the illumination angular velocity of the observation target object according to a weighting factor or the like set preliminarily.

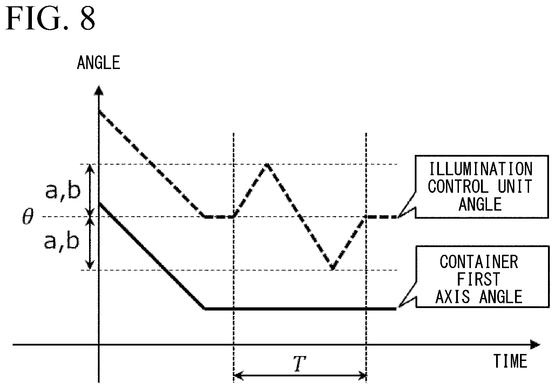

Thereafter, the inspection apparatus 110 is made to grip the container 200 (ST101: container gripping step), and the camera 300 starts imaging. FIG. 8 illustrates an operation example of a stationary swing of the container 200, the angle of the first illumination control unit 405, and the angle of the second illumination control unit 415.

The container 200 rotates along the first axis and a second axis (ST102: container rotation step), and angle control is started by the first illumination control unit 405 and the second illumination control unit 415 after the rotation is completed (ST103: incidence angle control step). The illumination angles of the angle of the first illumination control unit 405 and the angle of the second illumination control unit 415 reciprocate by the amplitudes of the angles a and b determined preliminarily with the angle θ as a center. The illumination angular velocity is controlled by controlling a period T of the reciprocation.

Next, a contour close to an original external shape of an air bubble or a foreign matter in the container 200 is extracted from continuous image data captured by the camera 300 in the control device 550 (ST104: image processing step).

In ST104, processing of ST104-1 to ST104-4 is performed.

First, the tracking means 5571 performs, for example, binarization processing on captured continuous image data and extracts XY coordinates of each of the observation target objects in the liquid as the tracking processing on each of the observation target objects in the liquid. In addition, the tracking means 5571 performs the tracking processing on each of the observation target objects by inter-frame difference calculation (ST104-1: tracking processing step). Though such processing, the tracking means 5571 identifies the observation target objects extracted from the image data as the observation target object moving for a certain time and the observation target object being stationary and outputs the observation target objects.

In ST104, the contour close to the original external shape of the observation target object is extracted according to a movement amount of the observation target object by performing the illumination angle control and the contour extraction using the movement speed of each of the observation target objects obtained by the tracking processing.

Subsequent to ST104-1, the stationary section determination means 5572 determines whether or not the stationary section that is the period during which the container 200 is stationary ends (ST104-2: stationary section determination step).

If the stationary section determination means 5572 determines that the stationary section does not end (ST104-2: NO), the process returns to ST103.

If the stationary section determination means 5572 determines that the stationary section ends (ST104-2: YES), the process proceeds to ST104-3.

In this case, the period T is determined by the illumination angular velocity control table according to a highest speed V among a plurality of movement speeds of the observation target objects calculated by the tracking processing.

With this, the illumination angular velocities of the first illumination control unit 405 and the second illumination control unit 415 are subjected to feedback control until the stationary section ends.

After the stationary section ends, the frequency determination means 5573 determines whether or not the swing frequency is less than the preliminarily set frequency (ST104-3: frequency determination step).

If the frequency determination means 5573 determines that the swing frequency is less than the preliminarily set frequency (ST104-3: YES), the process returns to ST102.

If the frequency determination means 5573 determines that the swing frequency is not less than the preliminarily set frequency (the swing frequency is equal to or greater than the preliminarily set frequency) (ST104-2: NO), the process proceeds to ST104-4.

That is, in a case where the swing frequency is equal to or greater than the preliminarily set frequency at the current angles of the first axis and the second axis, the swing ends, and image processing is started by a contour extraction block. In a case where the swing frequency is less than the preliminarily set frequency, the container 200 is rotated until a re-swing or until a swing set preliminarily ends.

After the swing ends, the contour extraction means 5574 extracts the contour of the external shape of the observation target object from the continuous image data captured by the camera 300 in the control device 550 (ST104-4: contour extraction step).

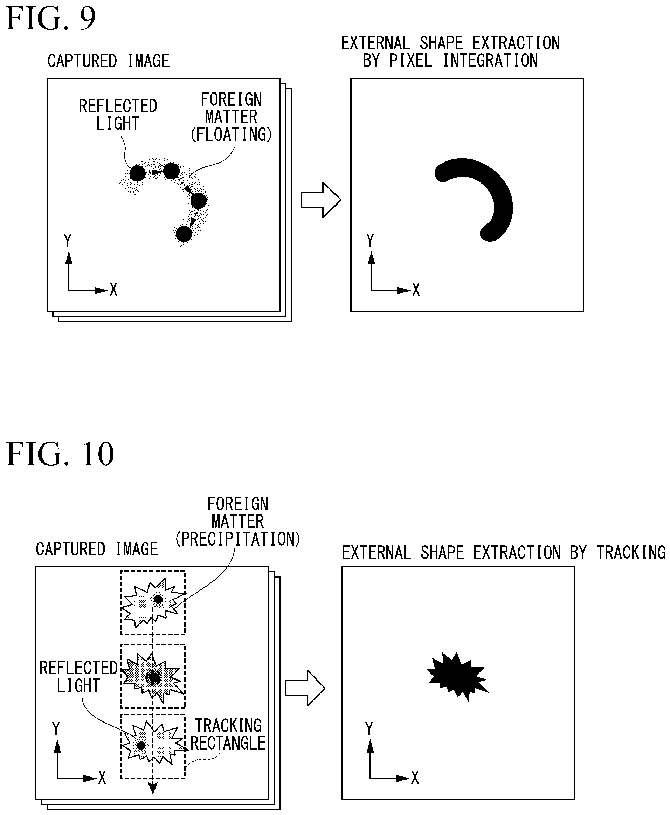

FIG. 9 is a diagram of an algorithm of the contour extraction block in a case where a certain observation target object such as a foreign matter or an air bubble is continuously floating in the same XY coordinates in continuous image data. Since the angles of the first illumination control unit 405 and the second illumination control unit 415 are continuously controlled, reflected light of the observation target object continuously moves along the external shape of the observation target object. Accordingly, in S104-4, to extract the contour from the movement of reflected light, pixel values around the observation target object of the continuous image data are integrated. Effectiveness for a liquid having high viscosity, foreign matter having a small specific gravity, and an air bubble or a foreign matter having a small size is expected.

FIG. 10 is a diagram of an algorithm of the contour extraction block in a case where XY coordinates of an observation target object such as a foreign matter or an air bubble are continuously updated according to movement such as precipitation, in continuous image data. Since the illumination angles of the first illumination control unit 405 and the second illumination control unit 415 are continuously controlled before the movement of the observation target object ends, an image where reflected light is most clearly reflected in the middle of the movement of reflected light of the observation target object is selected and extracted. Effectiveness for foreign matter having a large specific gravity or an air bubble or a foreign matter having a large size is expected.

The above operation is an overall operation example of the present example embodiment.

### (Operation and Effects)

Next, the operation and effects of the present example embodiment will be described.

**In** the present example embodiment, the inspection apparatus **110** is configured to continuously control the incidence angles of light emitted from the first illumination unit 400 and the second illumination unit 410 on the container 200 according to the movement speed of the observation target object and, at the same time, image a state of shifting a point where light is reflected on the surface of the same observation target object such as a foreign matter or an air bubble. Thus, it is possible to clearly extract the contour of the observation target object by image integration or the tracking processing.

For this reason, the inspection apparatus 110 of the present example embodiment easily detect the external shape of the observation target object.

### <Example Embodiment of Minimum Configuration of Inspection Apparatus>

An example embodiment of a minimum configuration of an inspection apparatus will be described.

### (Configuration)

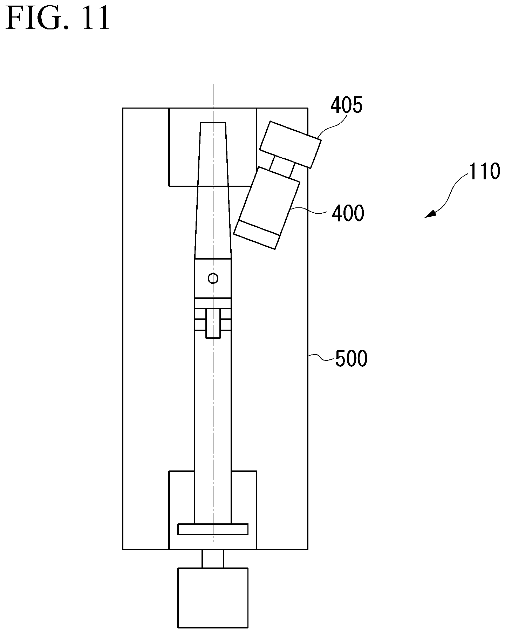

As illustrated in FIG. 11, an inspection apparatus 110 includes a gripping device 500, a first illumination unit 400, and a first illumination control unit 405.

The gripping device 500 grips a container filled with a liquid.

The first illumination unit 400 emits light to the liquid from one end portion side of the container 200 in a longitudinal direction.

The first illumination control unit 405 can control the incidence angle of light emitted from the first illumination unit 400 on the liquid to a freely selected angle.

The first illumination unit 400 and the first illumination control unit 405 are provided in the same direction as an imaging apparatus that acquires image data indicating a state of the liquid, as viewed from the container.

The inspection apparatus 110 can continuously control the incidence angle of light emitted from the first illumination unit to a freely selected angle with an angle at which brightness in the container is most uniform as a reference.

### (Operation and Effects)

In the present example embodiment, the inspection apparatus 110 can control the incidence angle of light emitted from the first illumination unit 400 on the container.

For this reason, the inspection apparatus 110 of the present example embodiment easily detects the external shape of the observation target object.

### <Example Embodiment of Minimum Configuration of Control Device>

An example embodiment of a minimum configuration of a control device will be described.

### (Configuration)

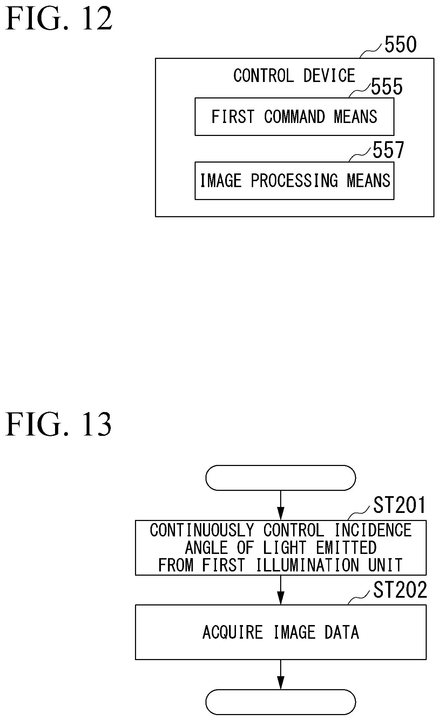

As illustrated in FIG. 12, a control device 550 includes first command means 555 and image processing means 557.

The first command means sends a command to a first illumination control unit to continuously control an incidence angle of light emitted from a first illumination unit, which emits light to a liquid from one end portion side of a container filled with the liquid in a longitudinal direction, on the liquid to a freely selected angle with an angle at which brightness in the container is most uniform as a reference.

The image processing means 557 acquires image data indicating the state of the liquid.

The first illumination unit and the first illumination control unit are provided in the same direction as an imaging apparatus that acquires the image data indicating the state of the liquid, as viewed from the container.

### (Operation and Effects)

In the present example embodiment, the control device 550 can control the incidence angle of light emitted from the first illumination unit on the container.

For this reason, the control device 550 of the present example embodiment easily detects the external shape of the observation target object.

### <Example Embodiment of Minimum Configuration of Inspection Method>

An example embodiment of a minimum configuration of an inspection method will be described.

### (Configuration)

As illustrated in FIG. 13, in the inspection method, an incidence angle of light emitted from a first illumination unit, which emits light to a liquid from one end portion side of a container filled with the liquid in a longitudinal direction, on the liquid is continuously controlled to a freely selected angle by a first illumination control unit with an angle at which brightness in the container is most uniform as a reference (ST201).

In the inspection method, image data indicating a state of the liquid is acquired (ST202).

In the inspection method, the first illumination unit and the first illumination control unit are provided in the same direction as an imaging apparatus that acquires the image data indicating the state of the liquid, as viewed from the container.

### (Operation and Effects)

In the present example embodiment, the inspection method can control the incidence angle of light emitted from the first illumination unit on the container.

For this reason, the inspection method of the present example embodiment easily detects the external shape of the observation target object.

In the respective example embodiments described above, procedures of various kinds of processing of equipment configuring the control device 550 are stored in a computer-readable recording medium in a program format, and various kinds of processing described above are performed by a computer executing the program. The computer-readable recording medium refers to a magnetic disk, a magneto-optical disc, a CD-ROM, a DVD-ROM, a semiconductor memory, or the like. The computer program may be distributed to a computer via a communication line, and the computer received the computer program may execute the program.

The above-described program may implement some of the above-described functions. In addition, the program may be a so-called difference file (difference program) that can implement the above-described functions in combination with a program already recorded in the computer system.

Although the present invention has been described above with reference to the example embodiments, the present invention is not limited to the above-described example embodiments. The configurations and details of the present invention can be changed in various manners that can be understood by one skilled in the art within the scope of the present invention.

### INDUSTRIAL APPLICABILITY

According to the above-described aspect, the external shape of the observation target object is easily detected.

### Reference Symbols

100 Inspection system
110 Inspection apparatus
200 Container
210 Liquid
300 Camera (imaging apparatus)
400 First illumination unit
405 First illumination control unit
410 Second illumination unit
415 Second illumination control unit
500 Gripping device
505 First gripping part
510 Second gripping part
530 First motor
540 Second motor
550 Control device
551 Arithmetic device
552 Storage device
553 Communication interface
555 First command means
556 Second command means
557 Image processing means
560 Determination device
5571 Tracking means
5572 Stationary section determination means
5573 Frequency determination means
5574 Contour extraction means
AXC Center axis

## Claims

1. An inspection apparatus comprising:
a gripping device that grips a container filled with a liquid;
a first illumination unit that emits light to the liquid from one end portion side of the container in a longitudinal direction; and
a first illumination control unit that is allowed to control an incidence angle of the light emitted from the first illumination unit on the liquid to a freely selected angle,
wherein the first illumination unit and the first illumination control unit are disposed in the same direction as an imaging apparatus that acquires image data indicating a state of the liquid, as viewed from the container, and
wherein the incidence angle of the light emitted from the first illumination unit is made continuously controllable to the freely selected angle with an angle at which brightness in the container is most uniform as a reference.

2. The inspection apparatus according to claim 1, further comprising:
a second illumination unit that emits light to the liquid from the other end portion side of the container in the longitudinal direction; and
a second illumination control unit that is allowed to control an incidence angle of the light emitted from the second illumination unit on the liquid to a freely selected angle,
wherein the second illumination unit and the second illumination control unit are disposed in the same direction as the imaging apparatus as viewed from the container, and
wherein the incidence angle of the light emitted from the second illumination unit is made continuously controllable to the freely selected angle with an angle at which brightness in the container is most uniform as a reference.

3. The inspection apparatus according to claim 1 or 2, further comprising:
a control device that controls the first illumination unit and the first illumination control unit to emit the light to the liquid from a position where a center axis passing through a center of the container is tilted by a freely selected value with respect to the reference in a vertical direction perpendicular to the center axis.

4. The inspection apparatus according to any one of claims 1 to 3,
wherein the first illumination unit continuously emits the light to the liquid at -20 degrees to +20 degrees with respect to the reference, and
wherein the imaging apparatus acquires image data indicating a state of an observation target object in the liquid during light emission.

5. The inspection apparatus according to claim 4, further comprising:
image processing means for identifying the observation target object moving for a certain time and the observation target object being stationary from the image data and outputting the observation target object.

6. An inspection system comprising:
the inspection apparatus according to claim 5; and
a determination device,
wherein the image processing means extracts a contour close to an original external shape of the observation target object according to a movement amount of the observation target object from the image data, and
wherein the determination device determines a foreign matter based on the extracted contour.

7. A control device comprising:
a first command means for sending a command to a first illumination control unit to continuously control an incidence angle of light emitted from a first illumination unit, which emits the light to a liquid from one end portion side of a container filled with the liquid in a longitudinal direction, on the liquid to a freely selected angle with an angle at which brightness in a container is most uniform as a reference; and
an image processing means for acquiring image data indicating a state of the liquid,
wherein the first illumination unit and the first illumination control unit are disposed in the same direction as an imaging apparatus that acquires the image data, as viewed from the container.

8. The control device according to claim 7, further comprising:
a second command means for sending a command to a second illumination control unit to continuously control an incidence angle of light emitted from a second illumination unit, which emits the light to the liquid from the other end portion side of the container in the longitudinal direction, on the liquid to a freely selected angle with an angle at which brightness in the container is most uniform as a reference,
wherein the second illumination unit and the second illumination control unit are disposed in the same direction as the imaging apparatus as viewed from the container.

9. An inspection method comprising:
continuously controlling an incidence angle of light emitted from a first illumination unit, which emits the light to a liquid from one end portion side of a container filled with the liquid in a longitudinal direction, on the liquid to a freely selected angle by a first illumination control unit with an angle at which brightness in a container is most uniform as a reference; and
acquiring image data indicating a state of the liquid,
wherein the first illumination unit and the first illumination control unit are disposed in the same direction as an imaging apparatus that acquires the image data, as viewed from the container.

10. A program causing a computer to execute:
continuously controlling an incidence angle of light emitted from a first illumination unit, which emits the light to a liquid from one end portion side of a container filled with the liquid in a longitudinal direction, on the liquid to a freely selected angle by a first illumination control unit with an angle at which brightness in a container is most uniform as a reference; and
acquiring image data indicating a state of the liquid,
wherein the first illumination unit and the first illumination control unit are disposed in the same direction as an imaging apparatus that acquires the image data, as viewed from the container.
